# EUROPEAN PATENT SPECIFICATION

(11) **EP 4 147 919 B1**
(45) Date of publication and mention of the grant of the patent: **21.02.2024**
(21) Application number: 22191521.8
(22) Date of filing: 22.08.2022
(51) Int. Cl.: B60R 21/207

(54) **METHOD AND ARRANGEMENT FOR ASSEMBLING AN AIRBAG TO A VEHICLE SEAT**
VERFAHREN UND ANORDNUNG ZUR MONTAGE EINES AIRBAGS AN EINEM FAHRZEUGSITZ
PROCÉDÉ ET AGENCEMENT POUR ASSEMBLER UN AIRBAG SUR UN SIÈGE DE VÉHICULE

(30) Priority: 14.09.2021 FR 2109646
(43) Date of publication of application: 15.03.2023
(73) Proprietor: Martur France Automotive Seating and Interiors Sarl, 92500 Rueil-Malmaison (FR)
(72) Inventor: LORME, Fabrice, 92500 RUEIL-MALMAISON (FR); CIOBANU, Adrian, 117221 Cateasca (RO); PANDURU, Alin, 117221 Cateasca (RO)
(74) Representative: Robba, Pierpaolo

(56) References cited:
- WO-A1-2015/017674
- FR-A1- 2 912 361
- FR-A1- 2 952 331
- FR-A1- 2 978 712
- FR-A3- 2 940 212
- US-A- 6 045 151

## Description

### Technical Field of the Invention

The present invention relates to a method for assembling an airbag to a vehicle seat, allowing to make the assembling operation easier and more reliable.

The present invention also relates to an arrangement including an airbag and a concentrator and suitable for implementing the aforesaid method.

### Prior Art

Inflatable side airbags mounted to vehicle seats in order to provide additional protection to the seat occupant or to an occupant located rearward of the seat are known in the art.

More particularly, it is known from the art to stow an airbag beneath the trim cover of the vehicle seat: such airbag is configured to deploy through a tear seam provided in the cover. More precisely, in order not to adversely affect the comfort of the occupant, a slot is provided in the foam cushion of the vehicle seat beneath the trim cover and the airbag is passed through said slot, so that, in use, it is beneath the foam cushion (i.e. far from the back of the occupant). FR2940212A3, which is considered the closest state of the art with respect to claim 1, discloses a method for assembling an airbag to a vehicle seat according to the preamble of claim 1.

However, when the airbag has to deploy through the slot in the foam cushion and the seam in the trim cover, there are many variables involved in providing consistency in airbag deployment and airbag in-position timing.

The fabric type of the trim cover affects the deployment of the airbag, since different fabrics behave differently and have different tensile and tear strengths. Other variables introduced by the cover include the strength of the cover scrim layer or backing and the strength of the thin foam layer typically laminated to the cover fabric. The wear degree of the trim cover also introduces further variables.

Additional variables affecting the deployment of the airbag are introduced by the type and properties of the foam cushion, such as for instance the density of the foam, the presence or absence of a border wire embedded in the foam pad, and so on.

Even if a tear seam is arranged in the cover in order to provide a preferential location for airbag deployment, several variables affect the strength of the seam itself, such as the seam type, the number of stitches per centimeter, the thread strength, and so on.

As a result, the foam cushion and/or the trim cover may absorb some of the airbag inflation energy in the initial stages of airbag deployment and impair the function of the tear seam if the inflation energy is not properly managed.

In order to overcome these drawbacks and eliminate the variables associated to the presence of the trim cover and of the foam cushion, it has been proposed to use a force concentrator that surrounds the folded airbag and concentrates, or directs, the force of the inflating airbag to the designed deployment location.

The concentrator consists in one or more sheets made of non-stretchable, high tensile strength materials, which are arranged so as to form a sleeve around the airbag to help direct the inflation energy to the desired tearing location.

For instance, the concentrator may consist of two sheets joined to the trim cover at the tear seam location and extending away from the seam in opposite directions; the free ends of the sheets are joined to each other, thus forming a sleeve circumscribing the airbag.

Examples of vehicle seats including an air bag associated to a concentrator can be found for instance in documents US 5 973 603, US 6 045 151 and WO 2015/017674.

Concentrators have proven to be effective in improving reliability of airbag deployment and airbag in-position timing and, accordingly, they are widely used.

According to current practice, in order to assemble the airbag to a vehicle seat, the concentrator is fastened to the trim cover. Then, the trim cover is fitted onto the foam cushion and the concentrator is passed through a slot provided in the foam cushion, so that the concentrator itself and the airbag do not adversely affect the occupant's comfort. Afterwards, the foam cushion is mounted on the seat frame. At this stage, the airbag is arranged in the concentrator and fastened to the seat frame.

Such conventional method for assembling an airbag to a vehicle seat involves several disadvantages.

Namely, the assembling sequence is complex and involves the risk of many mistakes.

For instance, the operator may forget to put the airbag in the concentrator and fix it on the frame; further, there is the risk that the airbag is mounted to the wrong side of the vehicle seat (i.e. the inner side instead of the outer side).

The risk of mistakes is considerably increased by the fact that all the aforementioned operations are usually carried out by a single operator.

The main object of the present invention is to overcome the above-mentioned drawbacks by providing a method for assembling an airbag to a vehicle seat, which makes the assembling operation easier and more reliable.

Another object of the present invention is to provide an arrangement suitable for implementing said method.

These and other objects are achieved by a method and an arrangement as claimed in the attached claims.

### Summary of the Invention

The method of the invention provides for pre-assembling the airbag to the concentrator before the foam cushion is mounted to the seat frame.

Advantageously, such pre-assembling operation can be carried out in a working station different from the working station in which the foam cushion is mounted to the seat frame. This reduces the complexity of the assembling sequence, as well as the time needed for carrying out such operation.

The risk of mistakes is also strongly reduced. In detail, the risk of forgetting to put the airbag in the concentrator is suppressed. The risk of mispositioning the airbag on the vehicle seat is also suppressed.

Advantageously, during the pre-assembling operation the airbag is firmly secured to the concentrator.

As a result, the airbag is kept in the concentrator during transportation from a working station to another one and it cannot fall down from the concentrator.

In order to implement the above-described method, the invention also provides an arrangement comprising an airbag, a concentrator and a securing plate. Such securing plate is configured to engage the airbag so that a wall of the concentrator is sandwiched between the airbag and the plate and the airbag is firmly secured to the concentrator.

According to a preferred embodiment of the invention, the airbag is provided - in a manner known per se - with connecting means for connection to the seat frame, a wall of the concentrator is provided with through-holes for the passage of said connecting means and the securing plate is configured to engage said connecting means, so as to secure the airbag to the concentrator.

According to a preferred embodiment of the invention, the airbag is provided with an identification code (such as a barcode) and the concentrator is provided with an inspection window, which is arranged so as to be aligned with the airbag identification code when the airbag is secured to the concentrator.

Thanks to the provision of such inspection window in the concentrator, it is possible to check whether the right type of airbag has been pre-assembled to the concentrator before the foam cushion is mounted to the seat frame.

### Brief Description of the Drawings

Further features and advantages of the invention will become more evident from the following description of a preferred embodiment of the invention, given by way of nonlimiting example, with reference to the attached Figures, in which:

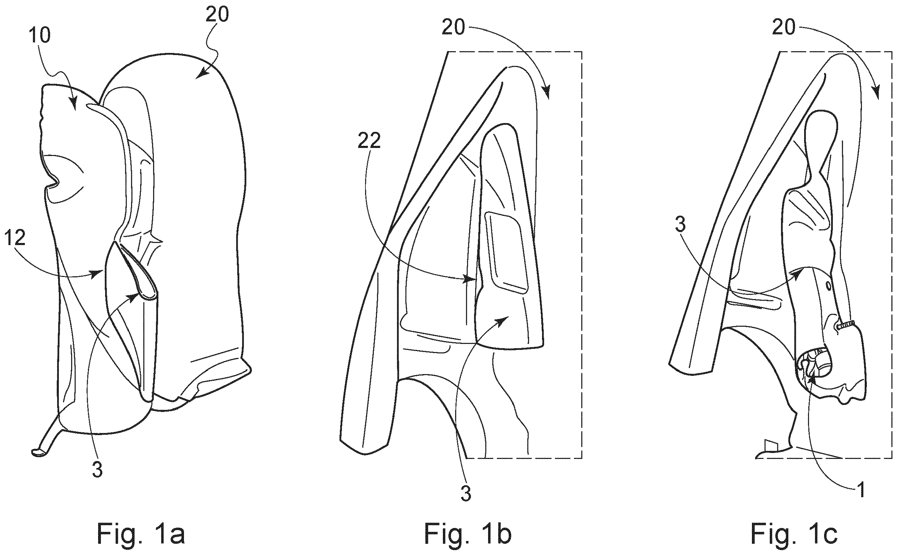

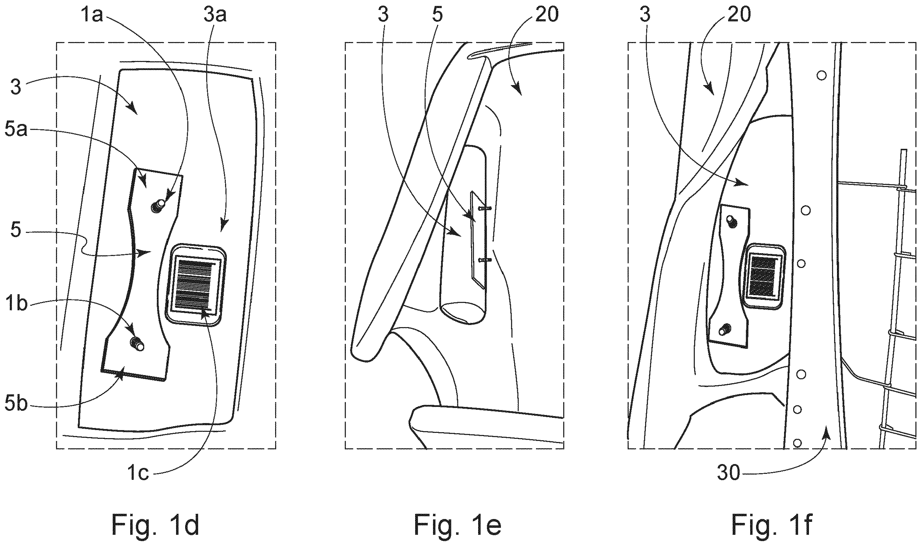

Figures 1a to 1i schematically show subsequent steps of the method according to the invention.

### Detailed Description of a Preferred Embodiment of the Invention

With reference to Figures 1a to 1i, the sequence for assembling an airbag to a vehicle seat according to the method of the invention is schematically shown.

At first, a concentrator 3 is fastened to a trim cover 10 of a vehicle seat (see Figure 1a).

The concentrator 3 has the shape of a sleeve and is made of non-stretchable, high tensile strength material.

Preferably, a tear seam 12 is provided in the trim cover 10 and the concentrator 3 is fastened to said trim cover 10 at the location of said tear seam 12.

Then, the trim cover 10 is fitted onto a foam cushion 20 of the vehicle seat (see Figure 1b). Preferably, the foam cushion is provided with a slot 22 for receiving the concentrator 3, so as to guarantee the maximum comfort to the occupant of the vehicle seat, and the concentrator 3 is passed through the slot 22 of the foam cushion 20.

At this stage, according to the invention, an airbag 1 is pre-assembled to the concentrator 3 (see Figure 1c).

According to the preferred embodiment of the invention shown in the Figures, not only the airbag 1 is pre-assembled to the concentrator 3, but is firmly secured to said concentrator.

To this aim, a securing plate 5 is provided, which plate 5 is configured to be arranged outside the concentrator 3 and to engage the airbag 1, so that a wall of the concentrator is sandwiched between the airbag 1 and the plate 5 and the concentrator is secured to the airbag.

In detail, the airbag 1 is provided - in a manner known per se - with connecting means 1a, 1b for connection to a seat frame, namely with two threaded stems 1a, 1b in the shown embodiment.

The concentrator 3 is correspondingly provided with through-holes (not visible in the Figures) for the passage of the threaded stems 1a, 1b and the securing plate 5 is provided with through-holes 5a, 5b for engaging the threaded stems 1a, 1b.

In this way, the securing plate 5 can slide along the threaded stems 1a, 1b until firmly sandwiching the wall of the concentrator 3 against the underlying airbag 1 (see Figures 1d, 1e).

The securing plate 5 can be made, for instance, of paperboard or plastics, so that it does not involve any remarkable additional cost to the airbag arrangement. However, further appropriate materials (including textile materials) can be envisaged by the person skilled in the art.

Since the airbag 1 is firmly secured to the concentrator 3, the foam cushion 20 can be transported from a working station to another one, for instance by aerial carousel, without the risk for the airbag 1 of falling down.

This allows to carry out the pre-assembling operation in a working station other than the working station in which the foam cushion is assembled to the seat frame, which simplifies the assembling sequence and reduces the risk of mistakes by the operators.

As can be seen in Figure 1d, the airbag is provided with an identification code 1c and the concentrator 3 is provided with and inspection window 3a, which is arranged so as to be aligned with said identification code 1c, so that such identification code can be checked throughout the assembling process.

Thus, the foam cushion 20 is subsequently associated to a seat frame 30 and the airbag 1 is fastened to said seat frame 30.

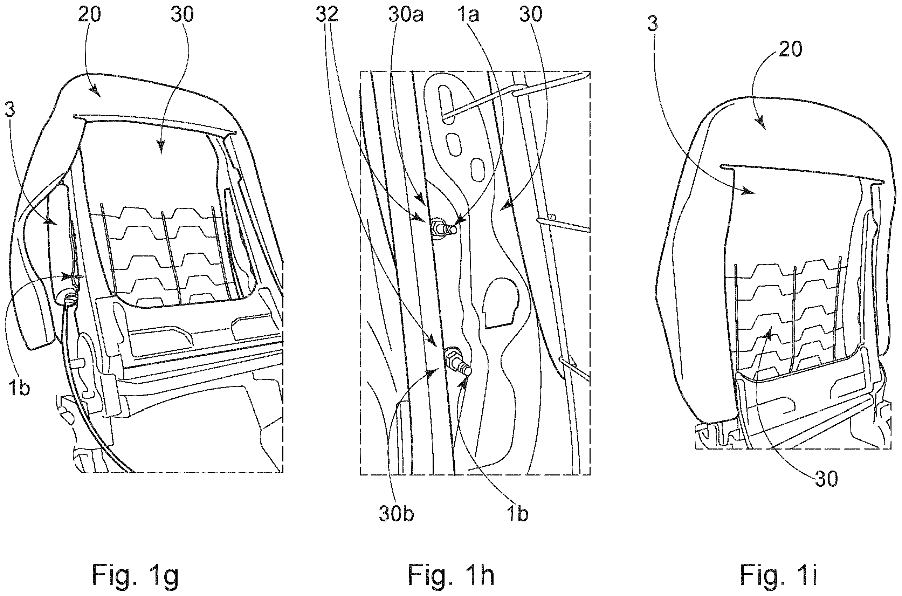

In the embodiment shown, the threaded stems 1a, 1b are inserted into corresponding holes 30a, 30b provided in one of the uprights of the frame 30 (namely, the upright on the outer side of the frame) and nuts 32 are used for tightening the airbag to the frame (see Figures 1g, 1h).

As a result, the foam cushion 20 and the airbag 1 are properly assembled to the seat frame 30 (see Figure 1i).

From the above disclosure, it is evident that the invention achieves the object set forth above. It is also evident that the embodiment disclosed above in detail shall be considered in no way as limiting and several modifications and variants within the reach of those skilled in the art can be implemented, without departing from the scope of protection as defined by the appended claims.

## Claims

1. Method for assembling an airbag (1) to a vehicle seat, which vehicle seat comprises a seat frame (30), a foam cushion (20) and a trim cover (10), wherein the method comprises the steps of:
- providing a concentrator (3), in the shape of a sleeve made of a of non-stretchable, high tensile strength material;
- fastening said concentrator (3) to said trim cover (10) of said vehicle seat;
- fitting said trim cover (10) onto said foam cushion (20);
- mounting said foam cushion (20) to said seat frame (30);
**characterized in that** said airbag (1) is pre-assembled to said concentrator (3) before said foam cushion (20) is mounted to said seat frame (30).

2. Method according to claim 1, wherein during said step of pre-assembling said airbag to said concentrator said airbag (1) is firmly secured to said concentrator (3).

3. Method according to claim 2, wherein said airbag (1) is firmly secured to said concentrator (3) by means of a securing plate (5), said securing plate (5) engaging said airbag (1) and a wall of said concentrator (3) being sandwiched between said securing plate (5) and said airbag (1).

4. Method according to any of claims 1-3, wherein said trim cover (10) is provided with a tear seam (12) and said concentrator (3) is fastened to said trim cover (10) at said tear seam (12).

5. Method according to any of claims 1 - 4, wherein said foam cushion (20) is provided with a slot (22) and said concentrator (3) is passed through the slot (22) when said trim cover (10) is fitted onto said foam cushion (20).

6. Method according to any of claims 1-5, wherein, after having mounted said foam cushion (20) to said seat frame (30), said airbag (1) is fastened to said seat frame (30).

## Patentansprüche

1. Verfahren zur Montage eines Airbags (1) an einem Fahrzeugsitz, wobei der Fahrzeugsitz einen Sitzrahmen (30), ein Schaumstoffpolster (20) und einen Überzug (10) aufweist, wobei das Verfahren die folgenden Schritte umfasst:
- Bereitstellen eines Konzentrators (3), der als eine aus einem nicht dehnbaren, hochzugfesten Material bestehende Hülse ausgebildet ist;
- Befestigen des Konzentrators (3) an dem Überzug (10) des Fahrzeugsitzes;
- Anbringen des Überzugs (10) auf dem Schaumstoffpolster (20);
- Montieren des Schaumstoffpolsters (20) an dem Sitzrahmen (30);
**dadurch gekennzeichnet, dass** der Airbag (1) am Konzentrator (3) vormontiert wird, bevor das Schaumstoffpolster (20) an dem Sitzrahmen (30) montiert wird.

2. Verfahren nach Anspruch 1, wobei während des Schritts des Vormontierens des Airbags am Konzentrator der Airbag (1) fest am Konzentrator (3) gesichert wird.

3. Verfahren nach Anspruch 2, wobei der Airbag (1) mittels einer Sicherungsplatte (5) fest am Konzentrator (3) gesichert wird, wobei die Sicherungsplatte (5) an dem Airbag (1) angreift, und wobei eine Wand des Konzentrators (3) zwischen der Sicherungsplatte (5) und dem Airbag (1) eingeklemmt wird.

4. Verfahren nach einem der Ansprüche 1 - 3, wobei der Überzug (10) mit einer Reißnaht (12) versehen ist, und wobei der Konzentrator (3) an dieser Reißnaht (12) an dem Überzug (10) befestigt wird.

5. Verfahren nach einem der Ansprüche 1 - 4, wobei das Schaumstoffpolster (20) mit einem Schlitz (22) versehen ist, und wobei der Konzentrator (3) durch den Schlitz (22) geführt wird, wenn der Überzug (10) auf dem Schaumstoffpolster (20) angebracht wird.

6. Verfahren nach einem der Ansprüche 1 - 5, wobei nach der Montage des Schaumstoffpolsters (20) an dem Sitzrahmen (30) der Airbag (1) an dem Sitzrahmen (30) befestigt wird.

## Revendications

1. Procédé pour assembler un airbag (1) sur un siège de véhicule, lequel siège de véhicule comprend un cadre de siège (30), un coussin en mousse (20) et une coiffe (10), ce procédé comprenant les étapes consistant à :
- fournir un concentrateur (3), sous la forme d'un manchon en un matériau non extensible à haute résistance à la traction;
- fixer ce concentrateur (3) à cette coiffe (10) de ce siège de véhicule;
- mettre cette coiffe (10) sur ce coussin en mousse (20);
- monter ce coussin en mousse (20) sur ce cadre de siège (30);
**caractérisé en ce que** cet airbag (1) est pré-assemblé à ce concentrateur (3) avant que ce coussin en mousse (20) ne soit monté sur ce cadre de siège (30).

2. Procédé selon la revendication 1, dans lequel lors de ladite étape de pré-assemblage de cet airbag à ce concentrateur cet airbag (1) est fermement fixé à ce concentrateur (3).

3. Procédé selon la revendication 2, dans lequel cet airbag (1) est fermement fixé à ce concentrateur (3) au moyen d'une plaque de fixation (5), cette plaque de fixation (5) engageant cet airbag (1) et une paroi de ce concentrateur (3) étant coincée entre cette plaque de fixation (5) et cet airbag (1).

4. Procédé selon l'une quelconque des revendications 1 à 3, dans lequel cette coiffe (10) est pourvue d'une couture déchirable (12) et ce concentrateur (3) est fixé à cette coiffe (10) au niveau de cette couture déchirable (12).

5. Procédé selon l'une quelconque des revendications 1 à 4, dans lequel ce coussin en mousse (20) est pourvu d'une fente (22) et ce concentrateur (3) est passé à travers cette fente (22) lorsque cette coiffe (10) est mise sur ce coussin en mousse (20).

6. Procédé selon l'une quelconque des revendications 1 à 5, dans lequel, après avoir monté ce coussin en mousse (20) sur ce cadre de siège (30), cet airbag (1) est fixé à ce cadre de siège (30).
